# EUROPÄISCHE PATENTSCHRIFT

(11) **EP 1 856 221 B1**
(45) Veröffentlichungstag und Bekanntmachung des Hinweises auf die Patenterteilung: **22.03.2017**
(21) Anmeldenummer: 06706818.9
(22) Anmeldetag: 10.02.2006
(51) Int. Cl.: C09D 183/16, C09D 5/08

(54) **VERWENDUNG VON POLYSILAZANEN ALS PERMANENTE ANTI-FINGERPRINT-BESCHICHTUNG**
USE OF POLYSILAZANES AS PERMANENT ANTI-FINGERPRINT COATINGS
UTILISATION DE POLYSILAZANES EN TANT QUE REVETEMENT ANTI-EMPREINTES DIGITALES PERMANENT

(30) Priorität: 26.02.2005 DE 102005008857
(43) Veröffentlichungstag der Anmeldung: 21.11.2007
(73) Patentinhaber: AZ Electronic Materials (Luxembourg) S.à.r.l., 1160 Luxembourg (LU)
(72) Erfinder: BRAND, Stefan, 69493 Hirschberg-Leutershausen (DE); DIERDORF, Andreas, 65719 Hofheim (DE); LIEBE, Hubert, 65207 Wiesbaden (DE); WACKER, Andreas, 68165 Mannheim (DE)
(74) Vertreter: Rippel, Hans Christoph
(86) Internationale Anmeldenummer: PCT/EP2006/001188
(87) Internationale Veröffentlichungsnummer: WO 2006/089649

(56) Entgegenhaltungen:
- WO-A-2004/039904
- WO-A-2005/085374
- DE-A1- 10 320 180
- US-A- 4 933 160
- US-A1- 2002 034 885
- US-A1- 2003 164 113

## Beschreibung

Die vorliegende Erfindung betrifft die Verwendung von Polysilazanen als permanente Anti-Fingerprint-Beschichtung.

Gegenstände, die Metalloberflächen, wie beispielsweise aus Edelstahl, Aluminium oder verchromte Oberflächen besitzen sind weit verbreitet. Diese Oberflächen können einen dekorativen Zweck erfüllen, wie bei Gebrauchsgegenständen, im Haushalt, im Automobil- oder Architekturbereich und bei Möbeln. Außerdem können diese Metalloberflächen besondere Gebrauchseigenschaften aufweisen, wie gute Reinigbarkeit, geringes Anschmutzverhalten oder Korrosionsbeständigkeit. Diese Gebrauchseigenschaften sind im gewerblichen Bereich, beispielsweise im Handel, der Gastronomie, im Klinikbereich oder in Industrien wie der Lebensmittel verarbeitenden oder chemisch/pharmazeutischen Industrie von Relevanz.
Diese Metalloberflächen werden häufig oberflächlich bearbeitet, d.h. gebürstet, poliert oder anderweitig mit Oberflächenstrukturen versehen, um bestimmte optische Effekte oder Gebrauchseigenschaften zu erreichen und ohne eine weitere Beschichtung eingesetzt.

Derartige Metalloberflächen sind sehr anfällig gegenüber Anschmutzungen organischer Art, wie beispielsweise durch Reste von Lebensmitteln, Fetten und vor allem Fingerabdrücken. Solche Verschmutzungen werden auf den Metalloberflächen sehr leicht wahrgenommen und beeinflussen den dekorativen Effekt bzw. signalisieren dem Beobachter, dass die Oberfläche schmutzig und unhygienisch wirkt. Dazu kommt, dass vor allem Fingerabdrücke aufgrund ihrer Zusammensetzung, bestehend u.a. aus Fett, Proteinen, Schweiß und organischen Säuren bleibende Schäden an der Metalloberfläche hervorrufen können, sofern diese nicht rechtzeitig entfernt werden. Dies ist auf die chemische Reaktion der Bestandteile des Fingerabdrucks mit der Metalloberfläche zurückzuführen, wobei das Erscheinungsbild der Oberfläche dauerhaft verändert wird. Bei strukturierten Oberflächen, wie beispielsweise solchen aus gebürstetem Edelstahl ist die Reinigung durch das Profil der Oberfläche zusätzlich erschwert.

Zur Vermeidung von Anschmutzungen durch Fingerabdrücke über eine Beschichtung sind in der Literatur verschiedene Verfahren beschrieben. Eine solche Beschichtung wird als Anti-Fingerprint-Beschichtung bezeichnet Eine ideale Anti-Fingerprint-Beschichtung sollte einfach zu applizieren und auszuhärten sein, Permanenz und eine sehr gute Haftung auf der Metalloberfläche ausweisen. Darüber hinaus ist es wünschenswert, dass die Beschichtung visuell nicht wahrnehmbar ist und das ursprüngliche hochwertige Erscheinungsbild der Oberfläche nicht beeinträchtigt.

Die Wirkung einer Anti-Fingerprint-Beschichtung solite darin bestehen, die Haftung der Fingerabdrücke auf der beschichteten Oberfläche zu reduzieren, damit Fingerabdrücke weniger wahrgenommen werden. Die Reinigung der Metalloberfläche sollte auf einfachem Wege, idealerweise ohne Zuhilfenahme von Reinigungsmitteln, möglich sein. Außerdem sollte die Beschichtung die unterliegende Metalloberfläche vor der chemischen Reaktion mit den Bestandteilen der Fingerabdrücke schützen, so dass vorhandene Fingerabdrücke auch nach längerer Zeit wieder entfernt werden können, ohne dass eine bleibende Veränderung der Metalloberfläche zu erkennen ist.

Die WO 02/40604A2 beschreibt eine transparente, temporäre Anti-Fingerprint-Beschichtung auf wässriger Basis. Eine derartige Beschichtung löst sich nach kurzer Zeit wieder von der Oberfläche ab und bietet daher keinen permanenten Schutz.

WO 03122495A1 beschreibt ein Überzugsmittel für metallische Oberflächen auf Acrylatbasis, das durch UV-Strahlung gehärtet werden muss. Der entsprechende Lack wird dabei in relativ dicken Schichten aufgetragen, so dass dieser optisch wahrnehmbar ist. Außerdem ist die UV-Härtung mit einem hohen apparativen Aufwand verbunden und somit nur durchführbar, wenn die entsprechende Ausrüstung vorhanden ist und daher entsprechend kostspielig.

WO 03/46090A2 beschreibt die Verwendung einer wässrigen Wachsemulsion als Anti-Fingerprint-Beschichtung. Eine solche Beschichtung ist ebenfalls nicht permanent, da keine chemische Bindung an die Oberfläche erfolgt.
Der vorliegenden Erfindung lag die Aufgabe zugrunde, eine hochtransparente, einfach zu applizierende und permanente Anti-Fingerprint-Beschichtung für Metalloberflächen zu entwickeln, die dazu führt, dass Fingerabdrücke weniger gut auf der Oberfläche haften und somit das optische Erscheinungsbild weniger beeinflussen. Außerdem sollte eine Entfernung der Fingerabdrücke erleichtert werden. Des weiteren sollte durch die Beschichtung die chemische Reaktion der Bestandteile des Fingerabdruckes mit der Metalloberfläche unterbunden werden, so dass Reste von Fingerabdrücken auch nach längerer Zeit wieder rückstandslos entfernt werden können.

Überraschenderweise wurde nun gefunden, dass Beschichtungen auf Polysilazanbasis diese Anforderungen erfüllen.

Gegenstand der Erfindung ist daher die Verwendung von Polysilazanen zur Beschichtung von Metalloberflächen, enthaltend eine Lösung eines Polysilazans oder eine Mischung von Polysilazanen der allgemeinen Formel 1

-(SiR'R"-NR'")n- (1)

wobei R', R", R'" gleich oder unterschiedlich sind und unabhängig voneinander für Wasserstoff oder einen gegebenenfalls substituierten Alkyl-, Aryl-, Vinyl oder (Trialkoxysilyl)alkyl-Rest stehen, wobei es sich bei n um eine ganze Zahl handelt und n so bemessen ist, dass das Polysilazan ein zahlenmittleres Molekulargewicht von 150 bis 150.000 g/mol aufweist, in einem Lösemittel.

Besonders geeignet sind dabei sind dabei solche Polysilazane, in denen R', R", R'" unabhängig voneinander für einen Rest aus der Gruppe Wasserstoff, Methyl, Ethyl, Propyl, iso-Propyl, Butyl, iso-Butyl, tert.-Butyl, Phenyl, Tolyl, Vinyl oder 3-(Triethoxysilyl)-propyl, 3-(Trimethoxysilylpropyl) stehen.

In einer bevorzugten Ausführungsform werden Perhydropolysilazane der Formel 2 für die erfindungsgemäße Beschichtung verwendet. 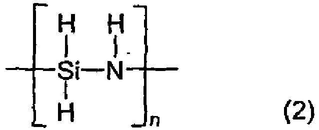 wobei es sich bei n um eine ganze Zahl handelt und n so bemessen ist, dass das Polysilazan ein zahlenmittleres Molekulargewicht von 150 bis 150.000 g/mol aufweist, sowie ein Lösemittel enthält.

In einer weiteren bevorzugten Ausführungsform enthält die erfindungsgemäße Beschichtung mindestens ein Polysilazan der Formel (3),

-(SiR'R"-NR'")ₙ-(SiR*R**NR***)ₚ- (3)

wobei R', R", R'", R*, R** und R*** unabhängig voneinander für Wasserstoff oder einen gegebenenfalls substituierten Alkyl-, Aryl-, Vinyl oder (Trialkoxysilyl)alkyl-Rest stehen, wobei es sich bei n und p um eine ganze Zahl handelt und n so bemessen ist, dass das Polysilazan ein zahlenmittleres Molekulargewicht von 150 bis 150.000 g/mol aufweist.

Insbesondere bevorzugt sind Verbindungen in denen
- R', R'" und R*** für Wasserstoff und R", R* und R** für Methyl stehen;
- R', R'" und R*** für Wasserstoff und R", R* für Methyl und R** für Vinyl stehen;
- R', R'", R* und R*** für Wasserstoff und R" und R** für Methyl stehen.

Ebenfalls bevorzugt sind Lösungen, die mindestens ein Polysilazan der Formel (4) enthalten

-(SiR'R"-NR'")ₙ-(SiR*R**-NR***)ₚ-(SiR¹, R²-NR³)_{q}- (4)

wobei R', R", R'", R*, R**, R***, R¹, R² und R³ unabhängig voneinander für Wasserstoff oder einen gegebenenfalls substituierten Alkyl-, Aryl-, Vinyl oder (Trialkoxysilyl)alkyl-Rest stehen, wobei es sich bei n, p und q um eine ganze Zahl handelt und n so bemessen ist, dass das Polysilazan ein zahlenmittleres Molekulargewicht von 150 bis 150.000 g/mol aufweist.

Insbesondere bevorzugt sind Verbindungen in denen
R', R'" und R*** für Wasserstoff und R", R*, R** und R² für Methyl, R³ für (Triethoxysilyl)propyl und R¹ für Alkyl oder Wasserstoff stehen.

Im allgemeinen beträgt der Anteil an Polysilazan im Lösemittel 1 bis 80 Gew.-% Polysilazans, bevorzugt 5 bis 50 Gew.-%, besonders bevorzugt 10 bis 40 Gew.-% enthält:

Als Lösemittel für die Polysitazanformulierung eignen sich besonders organische Lösemittel, die kein Wasser sowie keine reaktiven Gruppen (wie Hydroxyl- oder Amingruppen) enthalten. Dabei handelt es sich beispielsweise um aliphatische oder aromatische Kohlenwasserstoffe, Halogenkohlenwasserstoffe, Ester wie Ethylacetat oder Butylacetat, Ketone wie Aceton oder Methylethylketon, Ether wie Tetrahydrofuran oder Dibutylether, sowie Mono- und Polyalkylenglykoldialkylether (Glymes) oder Mischungen aus diesen Lösemitteln.

Zusätzlicher Bestandteil der Polysilazanformulierung können weitere Bindemittel sein, wie sie üblicherweise zur Herstellung von Lacken verwendet werden. Dabei kann es sich beispielsweise um Celluloseether und -ester, wie Ethylcellulose, Nitrocellulose, Celluloseacetat oder Celluloseacetobutyrat, natürliche Harze wie Kautschuk oder Kolophoniumharze oder Kunstharze, wie Polymerisationsharze oder Kondensationsharze, beispielsweise Aminoplaste, insbesondere Harnstoff-und Melaminformaldehydharze, Afkydharze, Acrylharze, Polyester oder modifizierte Polyester, Epoxide, Polyisocyanate bzw. blockierte Polyisocyanate oder Polysiloxane handeln.

Weiterer Bestandteil der Polysilazanformulierung können Additive, die z.B. Viskosität der Formulierung, Untergrundbenetzung, Filmbildung, Gleitwirkung oder das Ablüftverhalten beeinflussen oder anorganische Nanopartikel wie beispielsweise SiO₂, TiO₂, ZnO, ZrO₂ oder Al₂O₃ sein.

Zusätzlicher Bestandteil der Polysilazanformulierung können Katalysatoren wie. beispielsweise organische Amine, Säuren sowie Metalle oder Metallsalze oder Gemische dieser Verbindungen sein.
Katalysatoren werden vorzugsweise in Mengen von 0,001 bis 10 %, insbesondere 0,01 bis 6 %, besonders bevorzugt 0,1 bis 3 % bezogen auf das Gewicht des Polysilazans eingesetzt.

Beispiele für Aminkatalysatoren sind Ammoniak, Methylamin, Dimethylamin, Trimethylamin, Ethylamin, Diethylamin, Triethylamin, n-Propylamin, lsopropylamin, Di-n-propylamin, Di-isopropylamin, Tri-n-propylamin, n-Butylamin, Isobutylamin, Di-n-butylamin, Di-isobutylamin, Tri-n-butylamin, n-Pentylamin, Di-n-pentylamin, Tri-n-pentylamin, Dicyclohexylamin, Anilin, 2,4-Dimethylpyridin, 4,4-Trimethylenbis-(1-methylpiperidin), 1,4-diazabicyclo[2.2.2]octan, N,N-Dimethylpiperazin, cis-2,6-Dimethylpiperazin, trans-2,5-Dimethylpiperazin, 4,4-Methylenbis(cyclohexylamin), Stearylamin, 1,3-di-(4-Piperidyl)propan, N,N-Dimethylpropanolamin, N,N-Dimethylhexanolamin, N,N-Dimethyloctanolamin, N,N-Diethylethanolamin, 1-Piperidinethanol, 4-Piperidinol.

Beispiele für organische Säuren sind Essigsäure, Propionsäure, Buttersäure, Valeriansäure, Capronsäure.

Beispiele für Metalle und Metallverbindungen als Katalysatoren sind Palladium, Palladiumacetat, Palladiumacetylacetonat, Palladiumpropionat, Nickel, Nickelacetylacetonat, Silberpulver, Silberacetylacetonat, Platin, Platinacetylacetonat, Ruthenium, Rutheniumacetylacetonat, Rutheniumcarbonyle, Gold, Kupfer, Kupferacetylacetonat, Aluminiumacetylacetonat, Aluminiumtris(ethylacetoacetat).

Je nach verwendetem Katalysatorsystem kann die Gegenwart von Feuchtigkeit oder von Sauerstoff eine Rolle bei der Aushärtung der Beschichtung spielen. So kann durch Wahl eines geeigneten Katalysatorsystems die schnelle Härtung bei hoher oder niedriger Luftfeuchtigkeit bzw. bei hohem oder niederem Sauerstoffgehalt erreicht werden. Dem Fachmann sind diese Einflüsse bekannt und er wird durch geeignete Optimierungsmethoden die atmosphärischen Bedingungen entsprechend einstellen.

Weiterer Gegenstand der Erfindung ist ein Verfahren, bei dem Metalloberflächen mit einer Polysilazanlösung beschichtet werden.

Schließlich sind die erfindungsgemäß beschichteten Gegenstände Gegenstand. der Erfindung.

Die Anti-Fingerprint-Beschichtung kann durch übliche Beschichtungsverfahren appliziert werden, wie beispielsweise durch Sprühen, Tauchen, Fluten, Rakeln, Coil-Coating etc.

Vor dem Aufbringen der Beschichtung kann zunächst eine Primärschicht, die zur Verbesserung der Haftung der Polysilazanschicht auf der Metalloberfläche beitragen kann, aufgebracht werden. Typische Primer sind solche auf Silanbasis wie beispielsweise 3-Aminopropyltriethoxysilan, 3.-Glycidyloxypropyltriethoxysilan, 3-Mercaptopropyl-trimethoxysilan, Vinyltriethoxysilan, 3-Methacryloxypropyltrimethoxysilan, N-(2-Aminoethyl)-3-aminopropyltrimethoxysilan, Bis(3-triethoxysilylpropyl)amine, N-(n-Butyl)-3-aminopropyltrimethoxysilan, N-(2-aminoethyl)-3-aminopropyl-methyldimethoxysilan, 3-(Trimethoxysilyl)-1-propanthiol, Bis(3-(trimethoxysilyl)-1-propyl)disulfid, Bis(3-(trimethoxysilyl)-1-propyl)tetrasulfid.

Je nach verwendeter Polysilazanlösung und Katalysator erfolgt die Aushärtung entweder bereits bei Raumtemperatur (oder darunter) bzw. bei erhöhter Temperatur, kann aber in der Regel durch Erhitzen beschleunigt werden. Bevorzugt wird die Beschichtung bei einer Temperatur im Bereich von 10 bis 300°C, vorzugsweise 25 bis 200 °C gehärtet. Die maximal mögliche Temperatur zur Härtung hängt im wesentlichen vom Substrat ab, auf das die Beschichtung aufgebracht wird, da die Polysilazane eine sehr hohe Temperaturstabilität aufweisen.
Im Falle von Metallen, wie beispielsweise Edelstahl oder Aluminium können dies höhere Temperaturen sein, bei metallisierten Kunststoffoberflächen naturgemäß niedrigere Temperaturen.

Außer der Härtung durch konventionelle Trocknung ist auch die Verwendung von Trocknungsstrahlem basierend auf der IR- oder NIR-Technologie möglich. Dabei wird im Wellenlängenbereich von 12 bis 1,2 Mikrometer bzw. 1,2 bis 0,8 Mikrometer gearbeitet. Typische Strahlungsintensitäten liegen im Bereich von 5 bis 1000 kW/m².

Dem Beschichten mit der Polysilazanformulierung kann eine weitere Nachbehandlung folgen, mit der die Oberflächenenergie der Beschichtung angepasst wird. Damit können entweder hydrophile, hydrophobe oder oleophobe Oberflächen erzeugt werden, die die Verschmutzungsneigung beeinflussen.

Die Anti-Fingerprint-Beschichtung kann auf allen Metalloberflächen eingesetzt werden. Unter einer "Metalloberfläche" wird hier eine Oberfläche eines zumindest oberflächlich aus Metall bestehenden Gegenstandes verstanden. Dabei kann es sich um komplette Metallgegenstände handeln oder um Oberflächen von Gegenständen, die mit Metall beschichtet oder ummantelt sind, wie beispielsweise metallisierte Kunststoffe oder Verbundwerkstoffe. Die Metalloberfläche kann dabei eine Dicke von lediglich wenigen Mikrometern aufweisen.
Grundsätzlich sind alle edlen oder unedlen Metalle sowie Legierungen von Metallen zur Beschichtung geeignet, wie beispielsweise Eisen, Stahl, verzinkter Stahl, Aluminium, Chrom, Nickel, Zink, Titan, Vanadium, Molybdän, Magnesium, Kupfer.
Dabei können die Metalle auf übliche Art und Weise vorbehandelt sein, beispielsweise durch Chromatierung, chromatfreie Vorbehandlung, Anodisierung oder durch Bedampfen mit Metalioxidschichten.

Mit der erfindungsgemäßen Beschichtung ist es möglich, einen sehr guten Anti-Fingerprint-Effekt mit einer geringen Schichtdicke zu erzielen. Die ausgehärtete Polysilazanbeschichtung weist üblicherweise eine Schichtdicke von 0,1 bis 10, bevorzugt 0,5 bis 5, besonders bevorzugt 1 bis 3 Mikrometer auf. Damit ist die Beschichtung kaum wahrnehmbar und beeinflusst das optische Erscheinungsbild der Metalloberfläche nicht.

Die Beschichtung weißt eine sehr gute Haftung auf den unterschiedlichsten Metallen und Legierungen auf und ist daher ausgesprochen permanent. Zudem ist die Beschichtung aufgrund des anorganischen Charakters außergewöhnlich beständig gegenüber Lebensmitteln, Chemikalien, UV-Strahlung und Witterungseinflüssen.

Die erfindungsgemäß beschichteten Metalloberflächen können in den unterschiedlichsten Bereichen eingesetzt werden. Beispiele für diese Anwendungen sind Gebrauchsgegenstände, wie Etuis, Hüllen, Geschirr, Küchenutensilien, Elektrogeräte, Haushaltsgeräte. Weitere Beispiele sind dekorative Oberflächen im Automobilbau, Möbeloberflächen, für architektonische Anwendungen, Innenverkleidungen, im Sanitär- und Küchenbereich sowie im gewerblichen Bereich wie in der Gastronomie, Lebensmittelhandel und im industriellen Bereich wie in der Lebensmittel verarbeitenden oder chemisch/pharmazeutischen Industrie.

### Beispiele

Bei den verwendeten Perhydropolysilazanen handelt es sich um Produkte der Fa. Clariant Japan K.K. Verwendetes Lösemittel ist Di-n-butylether (Bezeichnung NL). Die Lösung enthält 0.75 Ges.-% Palladiumpropionat bezogen auf das Perhydropolysilazan als Katalysator.

Das Polysilazancopolymer aus Beispiel 2 wird durch Umsetzung von Dimethyldichlorsilan mit Methyldichlorsilan in Ammoniak und anschließender Reaktion mit 3-Aminopropyltriethoxysilan analog Beispiel 1 in US 6,652,978 B2 hergestellt.

In den folgenden Beispielen sind Teile und Prozentangaben auf das Gewicht bezogen.

### Beispiel 1 (Beschichtung eines Edelstahlsubstrats mit Perhydropolysilazan)

Eine Leiste (3 cm x 30 cm) aus gebürstetem Edelstahl wird mithilfe einer Sprühpistole mit einer 20 %igen Perhydropolysilazan-Lösung der Bezeichnung NL (s. o.) sprühbeschichtet. Nach 10 min Ablüften bei Raumtemperatur wird das Substrat in einem Trockenschrank (130°C 1 h) zwecks Aushärtung der Beschichtung thermisch nachbehandelt. Die Bestimmung der Schichtdicke ergab einen Wert von 2.1 µm.

### Beispiel 2 (Beschichtung eines verchromten Kunststoffsubstrates mit einem Polysilazancopolymer)

Ein verchromtes Kunststoffsubstrat (5 cm x 15 cm) wird in eine Lösung bestehend aus 36,7 Teilen Polysilazancopolymer (s. o.), 3,0 Teilen Paraloid B-48 S der Firma Rohm & Haas, 0,2 Teilen Tego Glide 410 der Firma Tego Chemie und 60,0 Teilen n-Butylacetat, getaucht. Nach dem Herausziehen des Substrats und Abtropfenlassen überschüssiger Lösung wird 5 min bei Raumtemperatur abgelüftet und anschließend 1 h bei 80°C im Trockenschrank thermisch nachbehandelt.

### Beispiel 3 (Haftung)

Die Bestimmung der Haftung der Beschichtung erfolgt durch Gitterschnitt-Prüfung nach DIN EN ISO 2409 mit anschließendem Klebestreifen-Abzug, wobei die Bewertung der Haftung auf einer Skala von 0 (bester Wert) bis 5 (schlechtester Wert) erfolgt; Beide beschichteten Metalloberflächen aus Beispiel 1 und 2 zeigen sehr gute Haftung zum Substrat (Gitterschnitt-Kennwert 0).

### Beispiel 4 (Anti-Fingerprint-Eigenschaften)

Auf die beschichteten Substrate aus den Beispielen 1 und 2 sowie auf die entsprechenden unbeschichteten Substrate wurde von jeweils drei Testpersonen ein Fingerabdruck aufgebracht und das Erscheinungsbild der Fingerabdrücke auf den beschichteten und unbeschichteten Substraten verglichen und visuell beurteilt.
Es wurde beobachtet, dass die Intensität, d.h. die visuelle Wahrnehmbarkeit der Fingerabdruckspuren auf den beschichteten Substraten deutlich geringer ist als auf den unbeschichteten Substraten. Anschließend wurde versucht, den Fingerabdruck mit einem Baumwolltuch zu entfernen und erneut eine visuelle Beurteilung vorgenommen. Bei den beschichteten Substraten konnten die Fingerabdruckspuren leicht und vollständig mittels eines Baumwolltuchs entfernt werden und waren visuell nicht mehr wahrnehmbar. Im Falle der unbeschichteten Substrate konnten trotz höherem Reinigungsaufwand als bei den beschichteten Substraten die Fingerabdruckspuren nicht vollständig beseitigt werden.

### Beispiel 5 (Langzeit-Test)

Auf die beschichteten Substrate aus den Beispielen 1 und 2 sowie auf die entsprechenden unbeschichteten Substrate wurde von jeweils drei Testpersonen ein Fingerabdruck aufgebracht. Anschließend wurden die Substrate 2 Wochen bei Raumtemperatur gelagert. Danach wurde versucht, die Fingerabdruckspuren auf den beschichteten und unbeschichteten Substraten mit iso-Propanol zu beseitigen. Bei den beschichteten Substraten konnten die Fingerabdruckspuren leicht und vollständig entfernt werden. Im Falle der unbeschichteten Substrate waren trotz höherem Reinigungsaufwand als bei den beschichteten Substraten immer noch Fingerabdruckspuren visuell erkennbar.

## Patentansprüche

1. Verwendung von Polysilazanen als permanente Beschichtung auf Metalloberflächen zur Verminderung der Empfindlichkeit gegenüber Fingerabdrücken, **dadurch gekennzeichnet, dass** es sich bei dem Polysilazan um eine Lösung eines Polysilazans oder eine Mischung von Polysilazanen der allgemeinen Formel 1
-(SiR'R"-NR'")ₙ- (1)
handelt, wobei R', R", R'" gleich oder unterschiedlich sind und unabhängig voneinander für Wasserstoff oder einen gegebenenfalls substituierten Alkyl-, Aryl-, Vinyl oder (Trialkoxysilyl)alkyl-Rest stehen, wobei es sich bei n um eine ganze Zahl handelt und n so bemessen ist, dass das Polysilazan ein zahlenmittleres Molekulargewicht von 150 bis 150.000 g/mol aufweist, in einem Lösemittel.

2. Verwendung gemäß Anspruch 1, **dadurch gekennzeichnet, dass** R', R", R'" unabhängig voneinander für einen Rest aus der Gruppe Wasserstoff, Methyl, Ethyl, Propyl, iso-Propyl, Butyl, iso-Butyl, tert.-Butyl, Phenyl, Vinyl oder 3-(Triethoxysilyl)-propyl, 3-(Trimethoxysilylpropyl) stehen.

3. Verwendung gemäß Anspruch 1 oder 2, **dadurch gekennzeichnet, dass** die Lösung mindestens ein Perhydropolysilazan der Formel 2 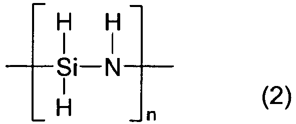 enthält.

4. Verwendung gemäß Anspruch 1, **dadurch gekennzeichnet, dass** die Lösung mindestens ein Polysilazan der Formel (3) enthält,
-(SiR'R"-NR'")ₙ-(SiR*R**-NR***)ₚ- (3)
wobei R', R", R'", R*, R** und R*** unabhängig voneinander für Wasserstoff oder einen gegebenenfalls substituierten Alkyl-, Aryl-, Vinyl oder (Trialkoxysilyl)alkyl-Rest stehen, wobei es sich bei n und p um eine ganze Zahl handelt und n so bemessen ist, dass das Polysilazan ein zahlenmittleres Molekulargewicht von 150 bis 150.000 g/mol aufweist.

5. Verwendung gemäß Anspruch 4, **dadurch gekennzeichnet, dass**
- R', R'" und R*** für Wasserstoff und R", R* und R** für Methyl stehen;
- R', R'" und R*** für Wasserstoff und R", R* für Methyl und R** für Vinyl stehen;
oder
- R', R"', R* und R*** für Wasserstoff und R" und R** für Methyl stehen.

6. Verwendung gemäß Anspruch 1, **dadurch gekennzeichnet, dass** die Lösung mindestens ein Polysilazan der Formel (4) enthält,
-(SiR'R"-NR"')ₙ-(SiR*R**-NR***)ₚ -(SiR¹, R²-NR³)_{q}- (4)
wobei R', R", R'", R*, R**, R***, R¹, R² und R³ unabhängig voneinander für Wasserstoff oder einen gegebenenfalls substituierten Alkyl-, Aryl-, Vinyl oder (Trialkoxysilyl)alkyl-Rest stehen, wobei es sich bei n, p und q um eine ganze Zahl handelt und n so bemessen ist, dass das Polysilazan ein zahlenmittleres Molekulargewicht von 150 bis 150.000 g/mol aufweist.

7. Verwendung gemäß Anspruch 6, **dadurch gekennzeichnet, dass** R', R'" und R*** für Wasserstoff und R", R*, R** und R² für Methyl, R³ für (Triethoxysilyl)propyl und R¹ für Alkyl oder Wasserstoff stehen.

8. Verwendung nach mindestens einem der vorhergehenden Ansprüche **dadurch gekennzeichnet, dass** die Polysilazanlösung 1 bis 80 Gew.-% des Polysilazans, bevorzugt 5 bis 50 Gew.-%, besonders bevorzugt 10 bis 40 Gew.-% enthält.

9. Verwendung nach mindestens einem der vorhergehenden Ansprüche, **dadurch gekennzeichnet, dass** die Polysilazanlösung 0,001 bis 10 Gew.-% eines Katalysators enthält.

10. Verwendung nach Anspruch 9, **dadurch gekennzeichnet, dass** als Katalysatoren organische Amine, Säuren, Metalle, Metallsalze oder Gemische dieser Verbindungen eingesetzt werden.

11. Verwendung nach mindestens einem der vorhergehenden Ansprüche, **dadurch gekennzeichnet, dass** als Lösemittel wasserfreie organische Lösemittel, die keine reaktiven Gruppen enthalten, verwendet werden.

## Claims

1. Use of polysilazanes as a permanent coating on metal surfaces for reducing susceptibility to fingerprints, **characterized in that** the polysilazane is a solution of a polysilazane or a mixture of polysilazanes of the general formula 1
-(SiR'R"-NR'")ₙ- (1)
where R', R", R'" are the same or different and are each independently hydrogen or an optionally substituted alkyl, aryl, vinyl or (trialkoxysilyl)alkyl radical, where n is an integer and n is such that the polysilazane has a number-average molecular weight of from 150 to 150 000 g/mol, in a solvent.

2. Use according to Claim 1, **characterized in that** R', R", R'" are each independently a radical from the group of hydrogen, methyl, ethyl, propyl, isopropyl, butyl, iso-butyl, tert-butyl, phenyl, vinyl or 3-(triethoxysilyl)propyl, 3-(trimethoxysilylpropyl).

3. Use according to Claim 1 or 2, **characterized in that** the solution comprises at least one perhydropolysilazane of the formula 2

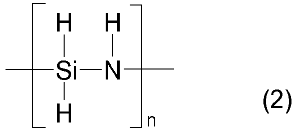

4. Use according to Claim 1, **characterized in that** the solution comprises at least one polysilazane of the formula (3)
-(SiR'R"-NR'")ₙ-(SiR*R**-NR***)ₚ- (3)
where R', R" R'" R* R** and R*** are each independently hydrogen or an optionally substituted alkyl, aryl, vinyl or (trialkoxysilyl)alkyl radical, where n and p are each integers and n is such that the polysilazane has a number-average molecular weight of from 150 to 150 000 g/mol.

5. Use according to Claim 4, **characterized in that**
- R', R'" and R*** are each hydrogen and R" , R* and R** are each methyl;
- R', R'" and R*** are each hydrogen and R" , R* are each methyl and R** is vinyl;
or
- R', R'", R* and R*** are each hydrogen and R" and R** are each methyl.

6. Use according to Claim 1, **characterized in that** the solution comprises at least one polysilazane of the formula (4)
- (SiR'R"-NR'")ₙ-(SiR*R**-NR***)ₚ -(SiR¹ R²-NR³)_{q}- (4) where R', R", R'", R*, R**, R***, R¹, R² and R³ are each independently hydrogen or an optionally substituted alkyl, aryl, vinyl or (trialkoxysilyl)alkyl radical, where n, p and q are each integers and n is such that the polysilazane has a number-average molecular weight of from 150 to 150 000 g/mol.

7. Use according to Claim 6, **characterized in that** R', R'" and R*** are each hydrogen and R", R*, R** and R² are each methyl, R³ is (triethoxysilyl)propyl and R¹ is alkyl or hydrogen.

8. Use according to at least one of the preceding claims, **characterized in that** the polysilazane solution comprises from 1 to 80% by weight of the polysilazane, preferably from 5 to 50% by weight, more preferably from 10 to 40% by weight.

9. Use according to at least one of the preceding claims, **characterized in that** the polysilazane solution comprises from 0.001 to 10% by weight of a catalyst.

10. Use according to Claim 9, **characterized in that** the catalysts used are organic amines, acids, metals, metal salts or mixtures of these compounds.

11. Use according to at least one of the preceding claims, **characterized in that** the solvents used are anhydrous organic solvents which do not contain any reactive groups.

## Revendications

1. Utilisation de polysilazanes comme revêtement permanent sur des surfaces métalliques pour diminuer la sensibilité aux empreintes digitales, **caractérisée en ce qu'**il s'agit, pour le polysilazane, d'une solution d'un polysilazane ou d'un mélange de polysilazanes de formule générale 1
(SiR'R"-NR'")ₙ- (1)
dans laquelle R', R", R'" sont identiques ou différents et représentent, indépendamment les uns des autres, hydrogène ou un radical alkyle, aryle, vinyle ou (trialcoxysilyl)alkyle, le cas échéant substitué, où il s'agit, pour n, d'un nombre entier et où n est dimensionné de manière telle que le polysilazane présente un poids moléculaire numérique moyen de 150 à 150.000 g/mole, dans un solvant.

2. Utilisation selon la revendication 1, **caractérisée en ce que** R', R'', R'" représentent, indépendamment les uns des autres, un radical du groupe formé par l'hydrogène, méthyle, éthyle, propyle, iso-propyle, butyle, iso-butyle, tert-butyle, phényle, vinyle ou 3-(triéthoxysilyl)-propyle, 3-(triméthoxysilyl)-propyle.

3. Utilisation selon la revendication 1 ou 2, **caractérisée en ce que** la solution contient au moins un perhydropolysilazane de formule 2

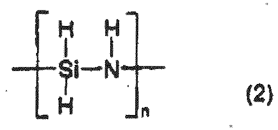

4. Utilisation selon la revendication 1, **caractérisée en ce que** la solution contient au moins un perhydropolysilazane de formule (3)
-(SiR'R"-NR'")ₙ-(SiR*R**-NR***)ₚ- (3)
dans laquelle R', R", R'", R*, R** et R*** représentent, indépendamment les uns des autres, hydrogène ou un radical alkyle, aryle, vinyle ou (trialcoxysilyl)alkyle, le cas échéant substitué, où il s'agit, pour n et p, d'un nombre entier et où n est dimensionné de manière telle que le polysilazane présente un poids moléculaire numérique moyen de 150 à 150.000 g/mole.

5. Utilisation selon la revendication 4, **caractérisée en ce que**
R', R'" et R*** représentent hydrogène et R", R* et R** représentent méthyle ;
R', R'" et R*** représentent hydrogène et R", R* représentent méthyle et R** représente vinyle ;
ou
R', R'", R* et R*** représentent hydrogène et R" et R** représentent méthyle.

6. Utilisation selon la revendication 1, **caractérisée en ce que** la solution contient au moins un polysilazane de formule (4)
-(SiR'R"-NR'")ₙ-(SiR*R**-NR***)ₚ-(SiR¹, R²-NR³)_{q}- (4)
où R', R", R'", R*, R**, R***, R¹, R² et R³ représentent, indépendamment les uns des autres, hydrogène ou un radical alkyle, aryle, vinyle ou (trialcoxysilyl)alkyle le cas échéant substitué, où il s'agit, pour n, p et q, d'un nombre entier et où n est dimensionné de manière telle que le polysilazane présente un poids moléculaire numérique moyen de 150 à 150.000 g/mole.

7. Utilisation selon la revendication 6, **caractérisée en ce que** R', R'" et R*** représentent hydrogène et R", R*, R** et R² représentent méthyle, R³ représente (triéthoxysilyl)propyle et R¹ représente alkyle ou hydrogène.

8. Utilisation selon au moins l'une quelconque des revendications précédentes, **caractérisée en ce que** la solution de polysilazane contient 1 à 80% en poids du polysilazane, de préférence 5 à 50% en poids, de manière particulièrement préférée 10 à 40% en poids.

9. Utilisation selon au moins l'une quelconque des revendications précédentes, **caractérisée en ce que** la solution de polysilazane contient 0,001 à 10% en poids d'un catalyseur.

10. Utilisation selon la revendication 9, **caractérisée en ce qu'**on utilise, comme catalyseurs, des amines, des acides organiques, des métaux, des sels métalliques organiques ou des mélanges de ces composés.

11. Utilisation selon au moins l'une quelconque des revendications précédentes, **caractérisée en ce qu'**on utilise, comme solvant, des solvants organiques anhydres, qui ne contiennent pas de groupes réactifs.
